# EUROPEAN PATENT SPECIFICATION

(11) **EP 0 927 617 B1**
(45) Date of publication and mention of the grant of the patent: **06.06.2001**
(21) Application number: 97122469.6
(22) Date of filing: 19.12.1997
(51) Int. Cl.: B29C 31/00, B29C 45/27

(54) **Hot runner nozzle**
Heisskanaldüse
Buse à canal chaud

(43) Date of publication of application: 07.07.1999
(73) Proprietor: Günther GmbH & Co.KG Metallverarbeitung, 35066 Frankenberg/Eder (DE)
(72) Inventor: Günther, Herbert, Dipl.-Ing., 35108 Allendorf/Eder (DE)
(74) Representative: Olbricht, Karl Heinrich, Dipl.-Phys.

(56) References cited:
- EP-A- 0 326 016
- EP-A- 0 528 315
- EP-A- 0 590 678
- EP-A- 0 689 923
- DE-A- 3 001 017
- DE-U- 9 407 758
- US-A- 5 326 251
- R. LÖHL: "Universelle Einsatzmöglichkeiten eines standardisierten Heisskanalsystems" KUNSTSTOFFE., vol. 75, no. 12, December 1985, MUNCHEN DE, pages 878-881, XP002064602
- PATENT ABSTRACTS OF JAPAN vol. 95, no. 8, 29 September 1995 & JP 07 132542 A (PURASUTORON KK), 23 May 1995,

## Description

The invention relates to a hot runner nozzle.

Moulds and in particular cavity moulds are typically used when an article is formed by injection moulding. In such an injection process, runners are provided to carry plastic or other material from a supply cavity to an injection cavity where a part or article is formed unter high pressure. The injection material tends to solidify in these runners and must be removed, thus leading both to excessive waste of material and to increased costs for removal thereof.

For remedy, the material in the runner and in the injection nozzle is heated. Associated with such heating is a need for accuracy of temperature in order to provide satisfactory control of the injection process. However accurate measurement of the temperature at the feed tube end could not be readily obtained in prior art hot runner nozzle.

DE-U-9 407 785 discloses a hot runner nozzle assembly of elements of uniform material composition. A nozzle body having a flow bore extends inside a snugly fitting peripheral heater over the entire nozzle length. An integral housing of non-specified material is situated in a nozzle head with annular insulating gaps thereto for reducing heat dissipation from the nozzle tip towards the interior of nozzle head. Due to a direct connection from its shoulder seated in the tool to the nozzle tip region, there is obivously only a small air gap at the outer nozzle head circumference for obtaining a minimum of heat insulation.

EP-A-0 528 315 deals with a structure having a strong shaft foot to which at least one nozzle tip is heat-conductingly joined and which finds upward support in a heat-conducting bush. This design requires extra heat separating elements, viz. a bush and a support ring of low heat conductivity. A heater tube around the material pipe provides directly sheathing.

A paper by R. Löhl entitled "Universelle Einsatzmöglichkeiten eines standardisierten Heißkanalsystems", Kunststoffe 75 (1985) Nr. 12, S. 878f. describes a hot runner system with an insert unit that comprises a central steel tube within a copper/beryllium nozzle body onto which a heater coil is wound. With a peripheral gap, a nozzle housing encompasses the insert unit to the bottom end of which it is form-fitted. The assembly is held in a nozzle head separated from the tool by a small circumferential gap but without material heat-insulation. The nozzle head is an integral tubular body whose conical end includes a sprue bush opposite the nozzle tip. The central steel tube may guide a hydraulically operated valve needle.

In accordance with DE-A-3 001 017, a hot runner nozzle includes an inner tube through which a melt can flow towards a nozzle tip where a sprue aperture can be closed by a central valve needle. The tube bears an insulating foil onto which an electric conductor is wound in two layers with an insulation sheet in between. In a clearance towards a cyclindrical metal sheath, the heater ensemble and a heat sensor are embedded in a ceramic mass.

A nozzle having a flat-ended tubular body through which a plastic mass can be injected into a tool is disclosed in EP-A-0 689 923. A heater coil encloses the tube tightly, with a wire of a thermocouple being clamped in a longitudinal groove by a resilient metal band. There is no outer body, e.g. a nozzle head or bush, that might encompass the unit described for heavy duty operation.

It is the object of the invention to provide hot runner nozzles of thermally improved and stabilized structure together with means for reducing operative heat dissipation from the nozzle bottom end and, in particular, from the nozzle tip to a tool in which the nozzle is fitted for use.

This object is achieved according to the invention by the hot runner nozzle as defined in independent claim 1. Specializations form the subject matter of claims 2 to 11.

In a hot runner nozzle of the general type shown in DE-U-9 407 785, comprising a housing and an externally heatable feed tube having a shaft with a tip at a shaft bottom end, heating means for the feed tube including a heater coil that extends towards the tip and surrounds the shaft, further comprising a heat sensor associated to the heating coil and provided with an extending portion that is seated in a positioning groove and reaches towards the tip of the heater coil, the invention provides according to claim 1 that the heating unit is stabilized by a compound body cast around an inner tube surrounding the shaft and that a gap along a lower portion of the shaft and/or a shaft foot made of a material of extremely low heat conductivity, such as titanium, surrounds the heating coil for reducing heat dissipation from the tip to the housing towards which the heat sensor extends beyond the heater coil.

This novel design warrants dimensional stability even under heavy load. As the heater is embedded in a support mass, it cannot during manufacture assume a misaligned position relative to the shaft, and the thermo-sensor will always be held firmly in its correct position within the heater bottom end and adjacent the nozzle tip. Moreover the gap filled with an insulating flow mass in operation and/or the novel foot shaft greatly contributes to excellent heat insulation and thus to enhanced operational characteristics. In order to achieve good injection results, the temperature distribution along the flow feed tube is usually governed such that there is a concentration of heat at the nozzle tip so that cooling effects at the gate will not lead to cold plugs in the article produced. Conventionally, said concentration of heat is coupled with relatively large operational heat losses due to insufficient insulation towards the housing and thus to the tool. By the introduction of a heat-impeding component by way of an additional gap and/or of the foot shaft, the insulation is markedly improved and heat dissipation to the tool is correspondingly reduced.

In accordance with claim 2, the inner tube is perforated to permit the flow of brass material cast around the heater coil for fully enveloping it. That is done with a heat-conducting material which flows under high temperature but when solidified, it stabilizes the heater coil under operating conditions.

Claim 3 states that the gap is provided between the shaft food and a sheath that includes the heating unit as well as the compound body, whereby this assembly is heat-insulated vis-à-vis the shaft foot which itself is a very effective heat insulator. Energy losses will thus be further reduced.

The embodiment of claim 4 is characterized in that the heating means comprises an outer sheath within which the heater coil and the heat sensor are arranged, the sheath being supported by a fixing ring around the shaft bottom end, whereby the heating coil and the sheath are prevented from moving towards the tip. This arrangement provides additional stability and increased accuracy of temperature measurement, especially if according to claim 5, the fixing ring has an opening in which a heat sensor extending portion is easily introduced and then permanently held. By claim 6, said opening e.g. an eye in the fixing ring, may be aligned with a groove formed along a lower portion of the outer periphery of the feed tube shaft.

Another development as defined by claim 7 comprises an insulating cap which surrounds a portion of the shaft foot and isolates the portion of the shaft foot from a tool including the nozzle, thereby lengthening the heat transfer path from the tip to the tool including the nozzle. According to claim 8, the insulating cap can be made of a polyether etherketone material (PEEK). It fills the space between the contour of the tool to which the nozzle is fitted and thus prevents plastic flow from entering said space; also, plastic masses of different colours can be changed more quickly and with little or no deterioration. In accordance with claim 9, the dimensions may advantageously be chosen such that the insulating cap surrounds the shaft foot along approximately one-half of the shaft foot length.

In a further embodiment as defined in claim 10, the shaft bottom end is provided with a receiving ring made of an insulating or low-conduction material, e.g. of titanium, whereby heat loss in the region of the nozzle tip is minimized. This receiving ring may, according to claim 11, comprise an internal shoulder for preventing its upward movement under operational pressure, and it may also have gaps or grooves as required.

### Brief Description Of The Drawings

The accompanying drawings, incorporated into and forming a part of the specification, illustrate several aspects of a preferred embodiment of the present invention and, together with the description, serve to explain the principles of the invention. In the drawings:
Fig. 1 shows a preferred embodiment of a hot runner nozzle assembly in accordance with the invention;
Fig. 2 shows a detail of the structure shown in Fig. 1;
Fig. 3 shows a modification of the embodiment of Fig. 1; and
Fig. 4 shows a detailed view of a portion of the embodiment Fig. 3.

### Derailed Description

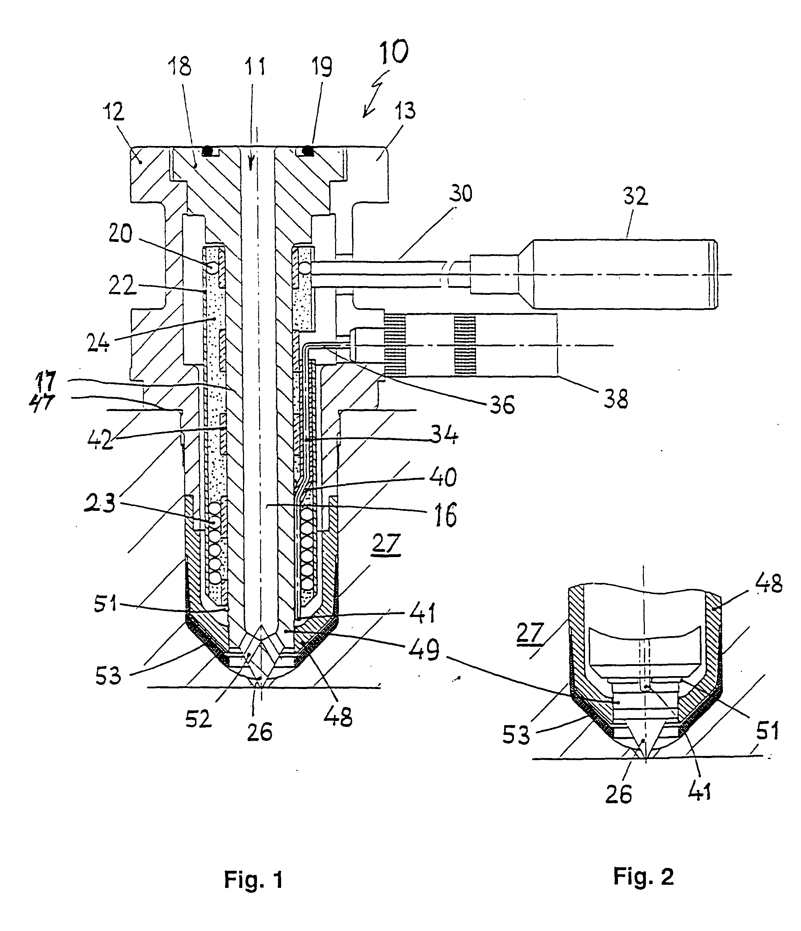

Referring now to the drawings, there is shown in Fig. 1 a nozzle 10 in accordance with the invention, the nozzle having a tip 26 and being used in a tool 27. Tool 27 does not form part of the present invention.

Nozzle 10 includes a housing 12 within which is provided a structure having an inlet 11 and a feed tube hollow 16. Feed tube hollow 16 is formed in a structure including a feed tube head 18 and a feed tube shaft 17, extending from an upper surface of housing 12 to tip 26. Housing 12 includes a recess 13 and a sealing ring 19. A heating unit 20 for the nozzle includes an outer steel sheath 22, a heating coil 23, a stabilizing tube in the form of a perforated copper sheet 42, for example, and a compound body 24 made of brass which is cast to form the structure.

The heating coil 23 may be a helical double-wound (bifilar) coil, a sheet metal resistor of generally cylindrical shape for example, or any other suitable heating device. Tube 42 advantageously provides an advantage in forming the apparatus, by supporting and stabilizing heating coil 23 during a casting process for the compound body 24. Tube 42, which is preferably a perforated tube, prevents inward movement of heating coil 23 toward the outer surface of the feed tube shaft during casting. Thus, the inner diameter of heating unit 20, at the outer diameter of feed tube shaft 17, is not damaged by movement of the heating coil. Moreover, by preventing inward movement of any portion of coil 23 beyond an acceptable limit, tube 42 assures that the coil is not damaged during boring of the feed tube hollow 16. The tube 42 is perforated in order to provide a cross-sectional area for the compound body which is greater than only the spacing between steel sheath and tube 42. Thus, during the casting process the cast brass flows through the perforations in tube 42 in order fully to envelope the heating coil 23.

Also illustrated in Fig. 1 are connectors 32 and 38 for heating coil 23 and for a heat sensor 34, respectively. A number of leads provide a connection means 30 between connector 32 and heating coil 23. Connection wiring 36 is provided between connector 38 and heat sensor 34. The specific shape, arrangement and configuration of recesses in the housing 12 to accommodate the various connectors and wiring connections are subject to variations as may be required.

In order to provide for more accurate temperature detection, a groove is provided at a lower portion of the device. More specifically, the groove is provided in the outer surface of feed tube shaft 17 under heating coil 23. The compound body 24 may include a separate groove therein to enable placing the sensor within the groove in shaft 17. The groove in shaft 17 accommodates the heat sensor 34 which, at an upper portion thereof, is included within a tube 40, positioned within a groove in the compound body 24, or otherwise meandering therethrough.

In a particular configuration, the sensor tube 40 is mounted at an upper portion of the housing within the compound body 24, upon entering the housing from connector 38, between the tube 42 and sheath 22 as seen in Fig. 1. Thus, sensor 34 is received within the bore of sheath 22 at this portion. In the lower portion of the nozzle, the sensor 34 is seated within coil 23. Preferably, coil 23 has a variable pitch and, as illustrated in Fig. 1, has a small pitch at the lower portion of the nozzle. Thus, there is an improved heat transfer between the heating coil 23 and sensor 34 at the lower portion. As above noted, at this portion the sensor is seated in a groove formed in a lower portion of the outer periphery of feed tube shaft 17. Thus, heat sensor 34 is in contact with the shaft 17 to obtain an accurate measurement of the temperature of the plastic material flowing therethrough at measuring point 41, at the bottom end 49 of the shaft. Perforated tube 42 is structured appropriately to include a vertically extending longitudinal separation, or void, therein in order to accommodate the heat sensor within heating coil 23 as shown in Fig. 1.

In order to stabilize the assembly, a fixing ring 51 is provided within a peripheral groove (not shown) at the bottom end 49 of feed tube shaft 17. Ring 51 prevents vertical movement of heating coil 23 and the compound body 24 along the feed tube, and particularly toward the tip 26. Preferably, fixing ring 51 includes an eye, or other opening, therein.

As apparent in Fig. 1, the heat sensor 34 is positioned within the opening in fixing ring 51, thus defining position of the measuring point 41. While the groove in feed tube shaft 17 and the eye in fixing ring 51 may be aligned, it will be appreciated that the groove need not be entirely vertical and may include a meandering portion to accommodate positioning of heat sensor 34 at the eye of ring 51. However, by providing a groove in the outer surface of feed tube shaft 17, the present invention eliminates a requirement which might otherwise arise, such as for boring an additional hole into the shaft. Moreover, in an embodiment wherein heat sensor 34 is included within heating coil 23 and immediately adjacent to (or in contact with) the feed tube shaft 17, rather than being within a groove provided therein, assembly may be simplified still further, particularly in light of establishment of the measuring point 41 by the eye in fixing ring 51.

In order to even out temperature distribution and to minimize temperature dissipation, the embodiment of Fig. 1 includes the following elements.

A shaft foot 48 is provided to prevent heat loss and dissipation from the bottom end 49 of shaft 17 to housing 12. As illustrated in Fig. 1, shaft foot 48 may be threadedly mounted to housing 12. To assure still less heat dissipation, and thus increased accuracy in measurement and control, the inventive structure is further configured to assure that the shaft foot touches tool 27 only at a position far removed from the tip 26 and thus the gate point. It will thus be appreciated ' that fixing ring 51 prevents movement of the heating coil toward the shaft foot 48. Preferably, shaft foot 48 is made of a material having a heat transfer characteristic less than 15 watts per meter degree Centigrade. It is preferred that a material such as titanium be utilized for the shaft foot.

As still further insulation, there is provided a gap between the shaft foot 48 and sheath 22 and the compound body 24 and heating coil 23 contained therein.

In light of the expense associated with titanium materials, the shaft foot is shown as extending along only a portion of the housing. In the embodiment of Fig. 1, the shaft extends approximately one-half the distance between a shoulder 47 formed in the housing and the tip 26. While the titanium shaft foot may be threadedly mounted on the housing, other modes of attachment may be utilized. such as bonding and the like.

As yet another feature of the invention, an insulating cap 53 is provided in order to lengthen the heat transfer path and reduce further any heat dissipation or heat and transfer to tool 27. The cap 53 is preferably formed of a low heat conductivity material, such as a plastic. The plastic used for the cap 53 is, as may be expected, of a material having a higher melting point than the material to be processed. For example, insulating cap 53 is preferably formed of a temperature-resistant material such as PEEK (polyether etherketone). The insulating cap 53 thus fills the space between the contour of the tool 27 which receives nozzle 10 and the tip 26. This structural feature thus prevents plastic flow from filling this space, where the plastic might deteriorate or spill out and enter the article being made. It should also be recognized that cap 53 also assists in quickly changing plastic masses of different colors.

The insulation thus may surround the entire titanium shaft foot. However, in light of expenses associated with PEEK, the preferred embodiment illustrated in Fig. 1 surrounds the titanium shaft foot for a vertical (longitudinal) distance of approximately the diameter of the housing. As apparent from Figs. 1 and 2, a gap may be provided between shaft foot 48 and cap 53, thus further to reduce heat dissipation. Cap 53 is placed over the titanium shaft foot as a sleeve which, as above noted, may be retained in place by the tool body.

Thus, with a high heat transfer tip 26, formed of a material such as tungsten carbide (preferably reinforced to withstand abrasion), and low heat transfer shaft foot and insulating cap, it will be appreciated that heat loss to the tool body is minimized and that the accuracy of temperature measurements and control for the injection material and the heating coil are improved significantly by the invention.

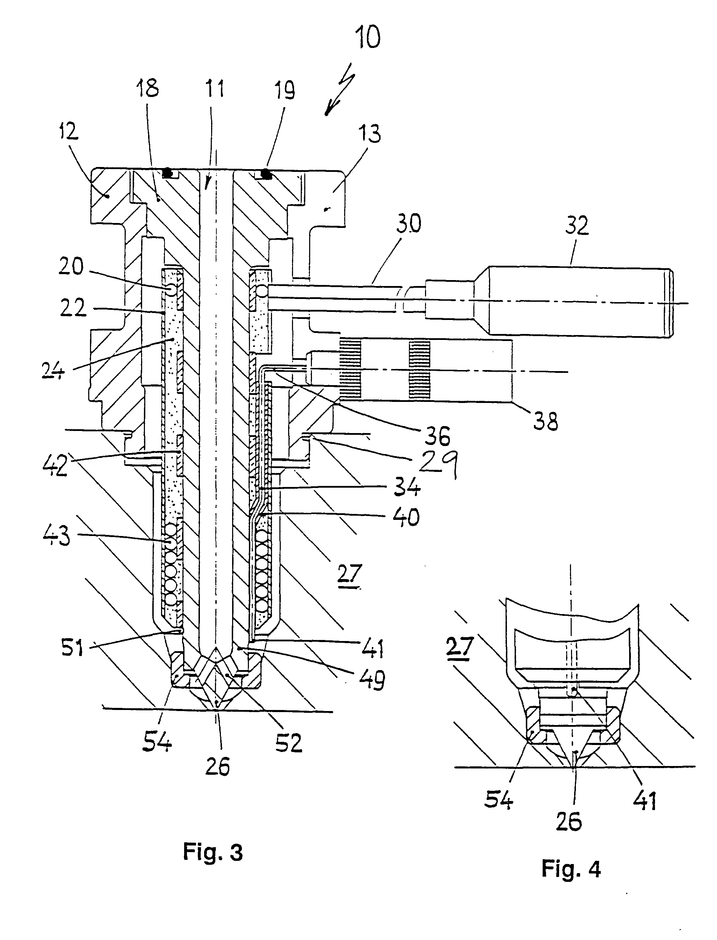

In Fig. 3 there is shown a modification of the inventive structure of Fig. 1. More particularly, in an environment wherein a reduced volume injection nozzle and/or heater is required, and where there may not be sufficient room for the titanium cap forming shaft foot 48 and the insulating cap 53, the nozzle 10 may include a centering sleeve 29. Centering sleeve 29 is preferably clipped on to the housing, rather than being soldered or screwed thereto. Bottom end 49 of the feed tube shaft 17 seals directly in tool 27.

However, in order to obtain various of the advantages arising from the inventive concept, to the extent possible in such a reduced volume configuration, there is provided a receiving ring 54 made of a material having extremely low heat conductivity. The receiving (or insulating) ring 54 is preferably made of titanium, to minimize heat loss in the region of tip 26.

As apparent from Fig. 4, the internal horizontal shoulder on ring 54 prevents upward movement thereof in response to material pressure. The ring may have gaps or grooves therein and, while not as efficient as the more complete insulation system of Figs. 1-2, nonetheless provides a compromise for situations wherein a smaller diameter structure is required. It is also noted that, because there is no contact in the embodiment of Fig. 3 between either the heating element or the feed tube and the tool 27, heat transfer is reduced even without presence of the titanium shaft foot structure.

As an illustration of the savings attained by the inventive concept with respect to heat loss and requirements for additional heating of the plastic injection material, it is estimated that for the embodiment of Figs. 3-4, nozzle operation would require a temperature which is approximately 20 degrees (C) higher without the use of insulating ring 54. The savings are still greater for the embodiment of Figs. 1-2.

The foregoing description of the preferred embodiment of the invention has been presented for purposes of illustration and description. It is not intended to be exhaustive or to limit the invention to the precise forms disclosed, since many modifications or variations thereof are possible in light of the above teaching. All such modifications and variations are within the scope of the invention. The embodiments described herein were chosen and described in order best to explain the principles of the invention and its practical application, thereby to enable others skilled in the art to utilize the invention in various embodiments and with various modifications as are suited to the particular use contemplated therefor. It is intended that the scope of the invention be defined by the claims appended hereto, when interpreted in accordance with the full breadth to which they are legally and equitably entitled.

### List of Reference Symbols

- F: mold cavity
- V: prechamber bush

- 10: hot runner nozzle
- 11: inlet
- 12: housing
- 13: recess
- 14: screw hole
- 16: material pipe/bush
- 17: shaft
- 18: head
- 19: sealing ring
- 20: heating unit
- 22: steel sheath
- 23: heating coil
- 24: seal(body)
- 25: inner wall
- 26: tip
- 27: tool
- 28: centering screw
- 29: centering sleeve
- 30: connection points
- 31: recess
- 32: connector
- 34: heat sensor
- 36: connection wiring
- 38: connector
- 40: sensor tube
- 41: extending portion
- 42: perforated sheet
- 44: recess/cutout
- 46: segment
- 47: shoulder
- 48: shaft foot
- 49: bottom end
- 50: tip insert
- 51: fixing ring
- 52: outlet
- 53: insulating cap
- 54: insulating ring

## Claims

1. A hot runner nozzle (10) comprising a housing (12) and an externally heatable feed tube (16) having a shaft (17) with a tip (26) at a shaft bottom end (49), heating means (20) for the feed tube (16) including a heater coil (23) that extends towards the tip (26) and surrounds the shaft (17), further comprising a heat sensor (34) associated to the heating coil (23) and provided with an extending portion (41) that is seated in a positioning groove and reaches towards the tip (26) of the heater coil (23), wherein the heating unit (20; 23) is stabilized by a compound body (24) cast around an inner tube (42) surrounding the shaft (17) and wherein a gap along a lower portion of the shaft (17) and/or a shaft foot (48) made of a material of extremely low heat conductivity, such as titanium, surrounds the heating coil (23) for reducing heat dissipation to the housing (12) from the tip (26).

2. Nozzle according to claim 1, wherein the inner tube (42) is perforated to permit the flow of brass material cast around the heater coil (23) for fully enveloping it.

3. Nozzle according to claim 1 or 2, wherein the gap is provided between the shaft foot (48) and a sheath (22) that includes the heating unit (20; 23) as well as the compound body (24).

4. Nozzle according to claim 1 or 2, wherein the heating means (20) comprises an outer sheath (22) within which the heater coil (23) and the heat sensor (34) are arranged, the sheath (22) being supported by a fixing ring (51) around the shaft bottom end (49), whereby the heating coil (23) and the sheath (22) are prevented from moving towards the tip (26).

5. Nozzle according to claim 4, wherein the fixing ring (51) has an opening in which a heat sensor extending portion (41) is held.

6. Nozzle according to claim 5, wherein the opening, e.g. an eye in the fixing ring (51), is aligned with a groove formed along a lower portion of the outer periphery of the feed tube shaft (17).

7. Nozzle according to any one of claims 1 to 6, wherein an insulating cap (53) surrounds a portion of the shaft foot (48) and isolates the portion of the shaft foot (48) from a tool (27) including the nozzle (10), thereby lengthening a heat transfer path from the tip (16) to the tool (27) including the nozzle (10).

8. Nozzle according to claim 7, wherein the insulating cap (53) is made of a polyether etherketone material (PEEK).

9. Nozzle according to claim 7 or claim 8, wherein the insulating cap (53) surrounds the shaft foot (48) along approximately one-half of the shaft foot length.

10. Nozzle according to any one of claims 1 to 9, wherein the shaft bottom end (49) is provided with a receiving ring (54) made of an insulating or low-conduction material, e.g. of titanium.

11. Nozzle according to claim 10, wherein the ring (54) comprises an internal shoulder for preventing an upward movement of the ring (54) under operational pressure.

## Patentansprüche

1. Heißkanaldüse (10) mit einem Gehäuse (12) und einem außenbeheizbaren Materialrohr (16), das einen Schaft (17) mit einer Düsenspitze (26) am unteren Schaft-Ende (49) hat, mit einer Heizeinrichtung (20) für das Materialrohr (16), die eine Heizwicklung (23) aufweist, sich zur Düsenspitze (26) hin erstreckt und den Schaft (17) umgibt, ferner mit einem Thermofühler (34), welcher der Heizwicklung (23) zugeordnet ist und eine Fühlerspitze (41) aufweist, die in einer lagesichemden Nut sitzt und zu der Düsenspitze (26) führt, **dadurch gekennzeichnet,** daß die Heizeinheit (20, 23) durch einen Verbundkörper (24) stabilisiert ist, der um ein den Schaft (17) umschließendes Innenrohr (42) gegossen ist, und daß zur Wärmeverlust-Minderung von der Düsenspitze (26) zum Gehäuse (12) hin die Heizwicklung (23) von einem Spalt entlang eines unteren Bereichs am Schaft (17) und/oder eines Schaftfußes (48) umgeben ist, der aus einem Material extrem kleiner Wärmeleitfähigkeit besteht, z.B. aus Titan.

2. Düse nach Anspruch 1, **dadurch gekennzeichnet,** daß zwecks Durchlaß von Messing-Gußmaterial, das um die Heizwicklung (23) gegossen wird, das Innenrohr (42) zur deren vollständiger Einhüllung gelocht ist.

3. Düse nach Anspruch 1 oder 2, **dadurch gekennzeichnet,** daß der Spalt zwischen dem Schaftfuß (48) und einem Schutzrohr (22) vorhanden ist, welches die Heizeinheit (20, 23) sowie den Verbundkörper (24) umgibt.

4. Düse nach Anspruch 1 oder 2, **dadurch gekennzeichnet,** daß die Heizeinrichtung (20) ein äußeres Schutzrohr (22) aufweist, innerhalb dessen sich die Heizwicklung (23) und der Thermofühler (34) befinden, wobei das Schutzrohr (22) an einem den unteren Schaftbereich (49) umgebenden Haltekragen (51) abgestützt ist, wodurch eine Bewegbarkeit von Heizwicklung (23) und Schutzrohr (22) zur Düsenspitze (26) hin unterbunden ist.

5. Düse nach Anspruch 4, **dadurch gekennzeichnet**, daß der Haltekragen (51) eine Öffnung aufweist, in der die Thermofühlerspitze (41) gehalten ist.

6. Düse nach Anspruch 5, **dadurch gekennzeichnet**, daß die Öffnung, z.B. eine Öse des Haltekragens (51), mit einer Nut fluchtet, die am unteren Außenumfangs-Bereich des Materialrohrschafts (17) gebildet ist.

7. Düse nach einem der Ansprüche 1 bis 6, **dadurch gekennzeichnet**, daß eine Isolierkappe (53) einen Bereich des Schaftfußes (48) umgibt und diesen Schaftfuß-Bereich in Bezug auf ein die Düse (10) enthaltendes Werkzeug (27) isoliert, wodurch die Wärmeübergangs-Strecke von dort zu der Düsenspitze (26) verlängert ist.

8. Düse nach Anspruch 7, **dadurch gekennzeichnet**, daß die Isolierkappe (53)aus einem Polyetheretherketon-Werkstoff (PEEK) besteht.

9. Düse nach Anspruch 7 oder 8, **dadurch gekennzeichnet,** daß die Isolierkappe (53) den Schaftfuß (48) entlang etwa halber Schaftfußlänge umgibt.

10. Düse nach einem der Ansprüche 1 bis 9, **dadurch gekennzeichnet,** daß das untere Schaft-Ende (49) mit einem Aufnahmering (54) versehen ist, der aus einem Isoliermaterial oder einem Werkstoff niedriger Wärmeleitfähigkeit besteht, z.B. aus Titan.

11. Düse nach Anspruch 10, **dadurch gekennzeichnet**, daß am Ring (54) innen eine Schulter vorhanden ist, um unter Betriebsdruck eine Aufwärtsbewegung des Ringes (54) zu verhindern.

## Revendications

1. Buse à canal chaud (10) comprenant un boîtier (12) et un tube d'alimentation (16) chauffable de l'extérieur et disposant d'une tige (17) avec une pointe (26) à une extrémité du bas (49) de la tige, et des moyens de chauffage (20) pour le tube d'alimentation (16) incluant une bobine de chauffage (23) qui s'étend vers la pointe (26) et entoure la tige (17), comprenant en outre une sonde thermique (34) associée à la bobine de chauffage (23) et pourvue d'une partie allongée (41) qui est logée dans une gorge de positionnement et s'étend vers la pointe (26) de la bobine de chauffage (23), **caractérisée** en ce que l'unité de chauffage (20; 23) est stabilisée par un corps compound (24) coulé autour d'un tube intérieur (42) entourant la tige (17), et en ce qu'un espace vide le long d'une partie inférieure de la tige (17) et/ou qu'un pied de tige (48) fait d'un matériau d'une très faible conductivité thermique tel que le titane entoure la bobine de chauffage (23) pour réduire la dissipation de la chaleur depuis la pointe (26) vers le boîtier (12).

2. Buse selon la revendication 1, **caractérisée** en ce que le tube intérieur (42) est perforé pour permettre au flux de matériau en laiton coulé autour de la bobine de chauffage (23) de l'envelopper entièrement.

3. Buse selon la revendication 1 ou 2, **caractérisée** en ce que l'espace vide est prévu entre le pied de tige (48) et une gaine (22) qui inclut l'unité de chauffage (20; 23) ainsi que le corps compound (24).

4. Buse selon la revendication 1 ou 2, **caractérisée** en ce que le moyen de chauffage (20) comprend une gaine extérieure (22), à l'intérieur de laquelle sont disposées la bobine de chauffage (23) et la sonde thermique (34), la gaine (22) étant tenue par une bague de fixation (51) autour de l'extrémité du bas (49) de la tige, ce par quoi la bobine de chauffage (23) et la gaine (22) sont empêchées de se déplacer vers la pointe (26).

5. Buse selon la revendication 4, **caractérisée** en ce que la bague de fixation (51) a une ouverture dans laquelle une partie allongée (41) de la sonde thermique est maintenue.

6. Buse selon la revendication 5, **caractérisée** en ce que l'ouverture, par exemple un oeillet dans la bague fixation (51), est alignée sur une gorge formée le long d'une partie inférieure de la périphérie extérieure de la tige (17) du tube d'alimentation.

7. Buse selon l'une des revendications 1 à 6, **caractérisée** en ce qu'une calotte isolante (53) entoure une partie du pied de tige (48) et isole la partie du pied de tige (48) envers un outil (27) incluant la buse (10), allongeant ainsi la voie du transfert de la chaleur depuis la pointe (16) jusqu'à l'outil (27) incluant la buse (10).

8. Buse selon la revendication 7, **caractérisée** en ce que la calotte isolante (53) est faite de polyéther éther-cétone (PEEK).

9. Buse selon la revendication 7 ou 8, **caractérisée** en ce que la calotte isolante (53) entoure le pied de tige (48) sur à-peu-près la demie-longueur du pied de tige.

10. Buse selon l'une des revendications 1 à 10, **caractérisée** en ce que l'extrémité du bas (49) de la tige est pourvue d'une bague de réception (54) faite d'un matériau isolant ou peu thermoconductible, par exemple de titane.

11. Buse selon la revendication 10, **caractérisée** en ce que la bague (54) dispose d'un épaulement intérieur pour empêcher un mouvement vers le haut de la bague (54) sous pression opérationnelle.
